# EUROPEAN PATENT SPECIFICATION

(11) **EP 4 194 587 B1**
(45) Date of publication and mention of the grant of the patent: **26.06.2024**
(21) Application number: 21213031.4
(22) Date of filing: 08.12.2021
(51) Int. Cl.: C25B 1/04, C25B 1/26, C25B 9/01, C25B 9/05, C25B 9/23, C25B 9/60, C25B 9/63, C25B 9/67, C25B 9/77, C25B 15/021, C25B 15/023, C25B 15/025

(54) **ELECTROLYZER WITH A CELL CASING MADE FROM METAL FOIL**
ELEKTROLYSEUR MIT EINEM ZELLENGEHÄUSE AUS METALLFOLIE
ÉLECTROLYSEUR DOTÉE D'UN BOÎTIER DE CELLULE CONSTITUÉ D'UNE FEUILLE MÉTALLIQUE

(43) Date of publication of application: 14.06.2023
(73) Proprietor: thyssenkrupp nucera AG & Co. KGaA, 44141 Dortmund (DE)
(72) Inventor: Toros, Peter, 45326 Essen (DE); Austenfeld, Sebastian, 59494 Soest (DE)
(74) Representative: thyssenkrupp Intellectual Property GmbH

(56) References cited:
- JP-A- 2006 004 754
- US-A- 6 087 033
- US-A1- 2011 259 735
- US-B1- 6 282 774

## Description

### Background of the invention

The invention relates to an electrolyzer according to the preamble of claim 1.

One type of bipolar electrolyzers for large-scale production (i.e. in the megawatt range) of hydrogen by alkaline water electrolysis and/or chlorine by chlor-alkali electrolysis is the so-called single element design.

In an electrolyzer of single element design, each electrolysis cell is a separately sealed unit. The casing of each electrolysis cell comprises two half-shells, which are bolted together in their rim regions, with a separator and gaskets interposed in-between. Thus, each half-shell forms one half-cell of the electrolysis cell, the half-cells being separated by the separator. The sealing force for sealing the electrolysis cell is provided by the plurality bolts distributed circumferentially along the rim regions of the cell elements. The separator may be an ion exchange membrane, or a porous diaphragm, depending of the intended purpose of the electrolyzer. A short-circuit between the two half-shells forming the casing of each electrolysis cell is to be reliably prevented, for which reason in addition to the gaskets at least one layer of electrically isolating material is interposed in the rim regions before sealing. The electrolysis cells are typically suspended from above in a cell rack and pressed against each other by using a compression device to form a bipolar stack.

From US 2011/0259735 A1 an electrolyzer according to the preamble of claim 1 is known. DE 196 41 125 A1 and US 6,282,774 B1 show further examples of electrolysis cells of the single element type of bipolar electrolyzers.

The known electrolysis cells of the single element design have the disadvantage that they require a substantial amount of high-grade metallic material, typically nickel and/or titanium, for the cell casing to provide dimensional stability to the single element electrolysis cells. The material strength of the cell casing is chosen such that it is able to support the weight of the cell in operating conditions, i.e. when it is filled with electrolyte. This design results in a considerable weight of the cell casings and high material costs.

JP 2006 004754 A describes a polymer electrolyte fuel cell. Generated water blocking the hydrogen gas flow can cause a non-uniformity in the electrode reaction and a sudden drop of battery output of this fuel cell. US 6 087 033 A describes another polymer electrolyte fuel cell.

### Brief Summary of Invention

The object of the invention is to provide an electrolyzer able to accommodate lightweight electrolysis cells with reduced material costs.

This object is achieved by an electrolyzer with the features of claim 1.

Hereby, an electrolyzer comprising a cell rack and a cell stack is provided. The cell stack comprises a plurality of electrolysis cells stacked in an axial direction. The cell rack comprises a compression device for compressing the electrolysis cells of the cell stack in the axial direction in order to maintain electrical connection of the cells in series. The cell stack is mounted in the cell rack with the axial direction extending horizontally. According to the invention, the electrolysis cells in the cell stack are configured as follows.

The electrolyzer comprises a cell casing and a sheet-like separator, wherein an anode chamber and a cathode chamber separated by the sheet-like separator are defined by the cell casing. The anode chamber and the cathode chamber comprise an anode and a cathode, respectively. According to the invention, the cell casing comprises at least two sheets of metal foil each having a circumferential rim region. The sheets of metal foil are affixed to each other in the rim regions by an electrically isolating adhesive bond between the sheets of metal foil. The sheet-like separator is mounted in the cell by being included in the adhesive bond between the rim regions. An adhesive bond according to this disclosure is any bond maintained by adhesion forces between the joined parts and a bonding material, which provides a connecting element between the joined parts.

Advantageously the electrolyzer comprises a new sealing concept for the cell casing by an adhesive bond with the use of metal foil sheets as the primary material for the cell casing. Thereby, the function of the cell casing is reduced to the purpose of delimiting the chambers of the electrolysis cell in an electrically conductive manner. Dimensional stability of the cell is no longer provided by the cell casing, but only by a cell rack, in which the cell is positioned in the electrolyzer. The use of metal foils reduces the amount and weight of metallic material needed for the casing to a fraction of less than 15% compared to the prior art. Further the sealing by an adhesive bond reduces the weight of the cell, since no bolts nor frame bars are required. The new cell design also facilitates automation of cell assembly.

In certain embodiments of the invention the adhesive bond may be provided by a chemically cured adhesive or a dried solvent-based adhesive. Chemically curing and solvent-based adhesives have the advantage of a particularly strong adhesive bonding, which is able to withstand high temperatures and/or harsh chemicals.

In other embodiments, the adhesive bond is provided by a thermoplastic material. Thermoplastic materials have the advantage that they allow for the possibility to open and re-seal the electrolysis cell in an easy and non-destructive way. For maintenance purposes, as e.g. replacement of the separators, the rim regions can be heated up again until the thermoplastic material is in the thermoplastic state again and the cell elements can be separated. Particularly preferred for sealing the electrolysis cells are thermoplastic materials that contain polypropylene (PP), in particular atactic polypropylene (PP-R), and/or polyvinylchloride (PVC).

Preferably, the sheets of metal foil have a thickness less than or equal to 0.2 mm. Particularly thin metal foils are preferred as cell casing not only to reduce the total amount material required, but also as to improve the flexibility of the cell casing which advantageous for establishing an extensive planar electrical connection of adjacent cells, when a plurality of cells is compressed in a cell stack.

The electrolysis cells may preferably be of rectangular, quadratic, hexagonal or round shape.

In particular, the invention relates to an electrolyzer comprising electrolysis cells of industrial scale used for alkaline water electrolysis or chlor-alkali electrolysis. The separator of the electrolysis cell according to the invention therefore preferably has an area of 0.5 m² to 4 m². Further, the electrolysis cell is preferably configured for current densities of at least 3 kA/m².

In embodiments of the invention, the cell casing is coated on the outer side in the rim regions with an electrically isolating layer. An electrically isolating layer in the rim regions of the cell casing is particularly preferred to reduce stray currents in cells to be operated in a tank filled with a barrier liquid. Even if the barrier liquid is chosen to have a high electrical resistance, stray currents at the joint of the rim regions cannot be excluded, in particular if there should occur any contamination of the barrier liquid with electrolyte from within the cells. In such a setup, an electrically isolating coating of the outer sides of the rim regions will be advantageous to reduce stray currents.

Preferably, the cell rack provides at least one inner boundary surface for the cell stack, which boundary surface provides dimensional stability to the cell stack by supporting the electrolysis cells at least laterally and from below. While the metal foils used for the cell casing are typically robust enough to be handled when the cell is in an empty state, they do not provide for sufficient dimensional stability on their own, when being filled with a liquid electrolyte, i.e. when being in operation. Thus, this function is preferably transferred to the cell rack. The inner boundary surface of the cell rack supporting the electrolysis cells at least laterally and from below achieves a pressure balance between the outside and the inside of the metal foil, such that the boundary surface dissipates the gravitational forces of the electrolyte and/or any additional pressure applied to the electrolyte. The inner boundary surface may either dissipate those forces by being in direct contact with the outer surface of the cell casings, or indirectly by an intermediary medium filling the space between the outer surface of the cell casings and the inner boundary surface of the cell rack.

In preferred embodiments, the cell rack comprises a tank with a tank wall, wherein the cell stack is positioned within the tank and the tank wall forms the at least one inner boundary surface for the cell stack, and wherein the tank is filled with an electrically non-conducting barrier liquid conveying dimensional stability of the cell rack to the cell stack immersed in the barrier liquid. The barrier liquid in the tank is able to provide a pressure balance between a liquid electrolyte in the cell and its outside, thereby relieving the stresses occurring within the material of the metal foil sheets. In particular, it is preferred if the barrier liquid has a density within the range of +/- 40% of the density of the liquid electrolyte, in order to achieve a similar height distribution of the pressure due to gravity.

Preferably, the tank is a pressure vessel with a round cross-section. Then the setup allows for an electrolysis at an elevated or even high pressure. The pressure vessel forms an outer protective cover of simple geometry, for which it is comparatively easy to comply with pressure vessel regulations, while the individual cells contained within the vessel do not have to be designed according to those regulations themselves.

Further, it is preferred that the electrolyzer comprises a conductivity sensor for monitoring the electrical conductivity of the barrier liquid. In normal operation, the conductivity of the barrier liquid should be below a specified threshold value. The conductivity rising above this threshold indicates a failure, in particular a leakage from one of the cells, as electrolyte leaking from the cells will increase conductivity of the barrier liquid.

In preferred embodiments, the barrier liquid contains an indicator liquid for indicating leakages of electrolyte from the cell stack by color change. Alternatively or in addition, the pH value of the barrier liquid may be monitored by a pH sensor.

In further preferred embodiments, the tank is connected to a circulation loop of the barrier liquid, wherein the circulation loop comprises a heat exchanger for heating and/or cooling the barrier liquid. Generally, the process of electrolysis generates waste heat. This waste heat may be drawn off, at least in part by cooling the barrier liquid via the heat exchanger. During start up, heating the barrier liquid may be preferred in order to quickly reach a preferred operating temperature.

Advantageously, a pressure sensor is provided to monitor the pressure in the tank, wherein the pressure sensor is connected to a control unit configured to control the pressure of the barrier liquid by adjusting a pressure applied from an external pressure source to the tank. In particular, the pressure control can be used to adjust the pressure of the barrier in the tank to the pressure of the electrolyte in the cells, i.e. as to keep the differential pressure between the inside and the outside of the cells below a specified threshold. The pressure from the external source may be applied by a gaseous auxiliary medium. In particular, an auxiliary medium being inert with respect to the products of the electrolysis is preferred. In case of chlor-alkali or alkaline water electrolysis, e.g. nitrogen is a preferred auxiliary medium.

In other preferred embodiments, the tank is completely filled with the barrier liquid and sealed for an autogenous pressure control of the barrier liquid. Thus, there is essentially no gaseous phase within the tank outside the electrolysis cells. Due to the flexibility of the cell casings, the pressure of the barrier liquid will then automatically follow the pressure of the electrolyte within the cells, wherein the cell casings will deform so as to maintain the pressure balance.

Further advantages of the invention are described in the following with regard to the embodiments shown in the attached drawings.

### Brief Description of Drawings

- Fig. 1: shows schematically three electrolysis cells,
- Fig. 2: shows schematically a first embodiment of the electrolyzer according to the invention, wherein electrolysis cells are stacked supported from the sides and from below by a boundary surface of a cell rack,
- Fig. 3: shows schematically a second embodiment of the electrolyzer according to the invention, wherein a stack of electrolysis cells is mounted in a tank filled with a barrier liquid with an external pressure control,
- Fig. 4: shows schematically a third embodiment of the electrolyzer according to the invention, wherein a stack of electrolysis cells is mounted in a closed tank filled with a barrier liquid with an autogeneous pressure control,
- Figs 5A to 5C: show schematically three different cell configurations of electrolysis cells mounted in a tank of round cross section.

### Detailed Description of Invention

In the drawings same parts are consistently identified by the same reference signs and are therefore generally described and referred to only once.

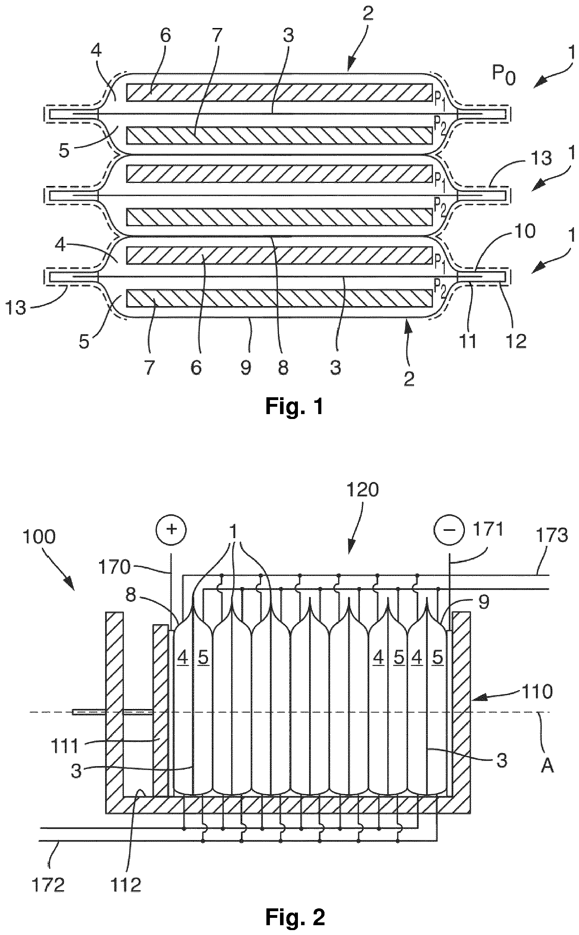

**Fig. 1** shows three electrolysis cells 1 stacked one upon another. Each electrolysis cell 1 comprises a cell casing 2 and a sheet-like separator 3. An anode chamber 4 and a cathode chamber 5 are defined by the cell casing 2 and separated from one another by the sheet-like separator 3. The anode chamber 4 and the cathode chamber 5 comprise an anode 6 and a cathode 7, respectively.

The cell casing 2 comprises at least two sheets of metal foil 8, 9 each having a circumferential rim region 10, 11. The sheets of metal foil 8, 9 are affixed to each other in the rim regions 10, 11 by an electrically isolating adhesive bond 12 between the sheets of metal foil 8, 9. The sheet-like separator 3 is mounted in the cell by being included in the adhesive bond 12 between the rim regions 10, 11.

Preferably, the sheets of metal foil 8, 9 have a thickness less than or equal to 0.1 mm.

The anode 6 and the cathode 7 are preferably provided by a mesh of wires, in particular a woven mesh. Compared to meshes made from an expanded metal, wires have the advantage not to have sharp edges, which could damage the metal foils 8, 9.

The adhesive bond 12 can be provided by a chemically cured adhesive or a dried solvent-based adhesive. Alternatively, the adhesive bond 12 can be provided by a thermoplastic material.

When being stacked upon each other and compressed in an axial direction, the electrolysis cells 1 due to their flexible cell casings 2 of metal foils 8, 9 form an extended contact surface between the anode chamber 4 and the cathode chamber 5 of an adjacent cell 1. On the contact surface there preferably will be a pressure balance between the pressure p1 in the anode chambers 4 and the pressure p2 in the cathode chambers 5. Moreover, there is a pressure balance between the inside pressures p1 and p2 and the outside pressure p0 of the cells 1. Preferably, the pressures p1, p2 and p0 are adjusted as to be equal up to relative differences of 10%, so as to reduce material stress within the sheets of metal foil 8, 9. Preferably, the pressure differences between the pressures p1, p2 and p0 do not exceed 0.5 bar(g).

As shown in Fig. 1, the cell casing 2 is coated in preferred embodiments on the outer side in the rim regions 10, 11 with an electrically isolating layer 13. An isolating layer 13 at the outside of the metal foil 8, 9 in the rim region, in particular in the non-contact area of adjacent cells 1 is helpful to prevent stray current in case of a barrier liquid that is or becomes (e.g. by slight leakage during operation) an imperfect isolating liquid. Of course, due to the requirement that there is a contact surface between adjacent cells 1 there will always be an imperfection at the end of the isolation layer 13 were stray currents could create damages. But the isolating layers 13 reduce the cross-section for stray currents flow and thus reduce the stray currents in general.

In **Fig. 2****,** an electrolyzer 100 comprising a cell rack 110 and a cell stack 120 is shown. The cell stack 120 comprises a plurality of electrolysis cells 1 stacked in an axial direction A. The cell rack 110 comprises a compression device 111 for compressing the electrolysis cells 1 of the cell stack 120 in the axial direction A in order to maintain electrical connection of the cells 1 in series. The cell stack 120 is mounted in the cell rack 110 with the axial direction A extending horizontally.

For installing the cells 1 in the cell stack 120 different possibilities exist: For example, the cells 1 can be suspended individually from an upper frame (not shown) of the cell rack 110. Alternatively, the cells 1 can be piled one upon the other while the cell rack is in an upright position with the axial direction A extending vertically. Once all cells 1 of the stack 120 are pre-piled and the compressive force is applied to the stack 120, the whole stack 120 is positioned in the operational state, i.e. with the axial direction A extending horizontally.

The cell rack 110 shown in Fig. 2 provides an inner boundary surface 112 for the cell stack 120, which boundary surface 112 provides dimensional stability to the cell stack 120 by supporting the electrolysis cells 1 at least laterally and from below.

For operation of the electrolyzer 100 a power supply 170, 171 is connected to the outmost cell casings 2 of the stack 120. Further, the anode and cathode chambers 4, 5 of the cells are connected to inlet headers 172 and outlet headers 173 for supply and discharge of electrolyte as well as discharge of the electrolysis products. The inlet and outlet headers 172, 173 preferably extend within the tank 113, as to minimize the number of openings in the tank 113. However, headers external to the tank can also be used, in principle. For the connecting with the inlet and outlet headers 172, 173 fittings of a more solid material are thermowelded to openings within the metal foil sheets 8, 9. These fittings are connected to the headers, e.g. by a threaded connection, hose-nozzle connection or gasket connection.

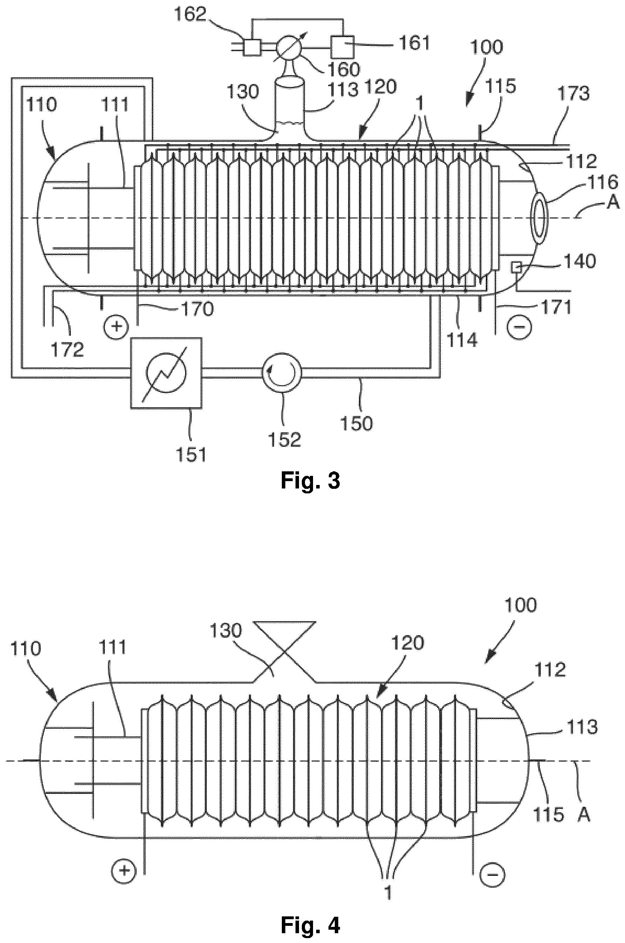

In **Fig. 3** a second embodiment of an electrolyzer 100 according to the invention is shown, in which the cell rack 110 comprises a tank 113 with a tank wall 114, wherein the cell stack 120 is positioned within the tank 113. The tank wall 114 forms the inner boundary surface 112 for the cell stack 120. The tank 113 is filled with an electrically non-conducting barrier liquid 130 conveying dimensional stability of the cell rack 110 to the cell stack 120 immersed in the barrier liquid 130. In particular, the tank 113 can be a pressure vessel with a round cross-section. For example, demineralized water can be used as barrier liquid 130.

The tank 113 originally consists of at least two parts that are joined after the cell rack 120 is installed in the tank 113. In the example shown in Fig. 3 the tank 113 is split transversally to the axial direction A in three parts, i.e. a central part and two lids, which are joined together at two flanges 115 by bolting. For installation, the electrolysis cells 1 are preferably hung in a frame (not shown) of the cell rack 120 in an axially moveable manner. Then, the frame is inserted into the open tank 113 from one side. Finally, the tank is closed by bolting of the flanges 115.

The compression device 111 may be positioned completely within the tank 113 as shown in Fig. 3. In this case, tightness of the tank 113 is achieved more easily, which is in particular of advantage if the tank 113 is designed as a pressure vessel. Alternatively, the compression device 111 may extend partly to the outside of the tank 113, for example, having an actuation rod extending to the outside.

The tank 113 is connected to a circulation loop 150 of the barrier liquid 130, wherein the circulation loop 150 comprises a heat exchanger 151 for heating and/or cooling the barrier liquid 130. The circulation loop 150 further comprises a pump 152 for circulating the barrier liquid 130.

For pressure control of the barrier liquid 130, a pressure sensor 160 is provided to monitor the pressure in the tank 113. The pressure sensor 160 is connected to a control unit 161 configured to control the pressure of the barrier liquid 130 by adjusting a pressure applied from an external pressure source 162 to the tank. The external pressure source 162 may provide e.g. an inert gas such as nitrogen to the tank 113. Preferably, the pressure p0 of the barrier liquid 130 is controlled such that it is equal to the pressures p1, p2 within the anode and the cathode chambers 4, 5 up to a relative pressure difference of maximally 10%.

A pressure sensor 160 may also be used to monitor the pressure of the barrier liquid 130, in order to detect incidents such as sudden pressure events (e.g. by small ignitions). The monitoring by a pressure sensor 160 of the barrier liquid 130 in more sensitive than monitoring e.g. the pressure in the outlet headers 173, since the barrier liquid 130 is practically incompressible compared to the gas portions in the outlet headers 173.

The electrolyzer 100 may further comprise a conductivity sensor 140 for monitoring the electrical conductivity of the barrier liquid 130.

Further the barrier liquid 130 contain an indicator liquid for indicating leakages of electrolyte from the cell stack 120 by color change. Such a color change may be recognized e.g. through an inspection window 116 or by using at least partly transparent ducts within the circulation loop 150.

In all other respects, the description of the first embodiment shown in Fig. 2 is applicable to the second embodiment shown in Fig. 3, accordingly.

**Fig. 4** shows a third embodiment of an electrolyzer 100 according to the invention. The third embodiment differs from the second embodiment in that the tank 113 is completely filled with the barrier liquid 130 and sealed for an autogenous pressure control of the barrier liquid 130. Thus, the tank 113 does not contain a gaseous phase outside of the cell stack 120 and is not connected a barrier liquid circulation loop. In this case, due to the incompressibility of liquids as compared to gases, the pressure of the barrier liquid 130 will follow the pressure of the media inside the electrolysis cells 1, such that a pressure balance at the cell casings 2 is maintained.

Exemplary, the tank of Fig. 4 is split lengthwise and bolted together at a horizontal flange 115. Joining the tank pieces by welding could also be feasible; however, maintenance of the cell stack 120 would be impaired.

In all other respects, the description of the first and second embodiments shown in Figs. 2 and 3 is applicable to the third embodiment shown in Fig. 4, accordingly. In particular, the electrolyzer of Fig. 4 will have similar inlet and outlet headers as in Fig. 3, which are not shown for simplicity in Fig. 4.

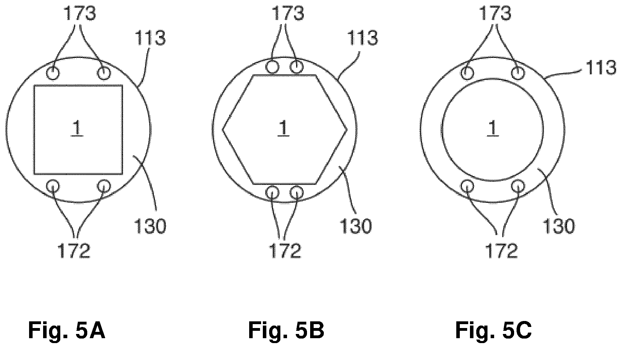

**Fig. 5A to 5C** illustrate different possible geometries of electrolysis cells 1 within the tanks 113 of the second and third embodiments shown in Figs. 3 and 4. Generally, due to the use of a barrier liquid 130 to mediate the dimensionally stabilizing effect of the tank wall 114 to the cell casings 2, the cross-section of the cells 1 can be chosen independently of the cross-section of the tank. Within a tank 113 of round cross section, in particular electrolysis cells 1 of rectangular or quadratic shape (Fig. 5A), hexagonal shape (Fig. 5B) or round shape (Fig. 5C) are preferred.

### List of Reference Signs

- 1: electrolysis cell
- 2: cell casing
- 3: sheet-like separator
- 4: anode chamber
- 5: cathode chamber
- 6: anode
- 7: cathode
- 8, 9: sheet of metal foil
- 10, 11: rim region
- 12: adhesive bond
- 13: electrically isolating layer
- 100: electrolyzer
- 110: cell rack
- 111: compression device
- 112: boundary surface
- 113: tank
- 114: tank wall
- 115: flange
- 116: inspection window
- 120: cell stack
- 130: barrier liquid
- 140: conductivity sensor
- 150: circulation loop
- 151: heat exchanger
- 152: pump
- 160: pressure sensor
- 161: control unit
- 162: external pressure source
- 170, 171: power supply
- 172: inlet headers
- 173: outlet headers
- A: axial direction

## Claims

1. Electrolyzer comprising a cell rack (110) and a cell stack (120), wherein the cell stack (120) comprises a plurality of electrolysis cells (1) stacked in an axial direction (A), wherein the cell rack (110) comprises a compression device (111) for compressing the electrolysis cells (1) of the cell stack (120) in the axial direction (A) in order to maintain electrical connection of the cells (1) in series, and wherein the cell stack (120) is mounted in the cell rack (110) with the axial direction (A) extending horizontally, wherein the electrolysis cells (1) each comprise a cell casing (2) and a sheet-like separator (3), wherein an anode chamber (4) and a cathode chamber (5) separated by the sheet-like separator (3) are defined by the cell casing (2) and wherein the anode chamber (4) and the cathode chamber (5) comprise an anode (6) and a cathode (7), respectively, **characterized in that** the cell casing (2) comprises at least two sheets of metal foil (8, 9) each having a circumferential rim region (10, 11), wherein the sheets of metal foil (8, 9) are affixed to each other in the rim regions (10, 11) by an electrically isolating adhesive bond (12) between the sheets of metal foil (8, 9), and wherein the sheet-like separator (3) is mounted in the cell by being included in the adhesive bond (12) between the rim regions (10, 11).

2. Electrolyzer according to claim 1, **characterized in that** the adhesive bond (12) is provided by a chemically cured adhesive or a dried solvent-based adhesive.

3. Electrolyzer according to claim 1, **characterized in that** the adhesive bond (12) is provided by a thermoplastic material.

4. Electrolyzer according to one of the claims 1 to 3, **characterized in that** the sheets of metal foil (8, 9) have a thickness less than or equal to 0.2 mm.

5. Electrolyzer according to one of the claims 1 to 4, **characterized in that** the electrolysis cell (1) is of rectangular, quadratic, hexagonal or round shape.

6. Electrolyzer according to one of the claims 1 to 5, **characterized in that** the cell casing (2) is coated on the outer side in the rim regions (10, 11) with an electrically isolating layer (13).

7. Electrolyzer according to any one of the claims 1 to 6, **characterized in that** the cell rack (110) provides at least one inner boundary surface (112) for the cell stack (120), which boundary surface (112) provides dimensional stability to the cell stack (120) by supporting the electrolysis cells (1) at least laterally and from below.

8. Electrolyzer according to claim 7, **characterized in that** the cell rack (110) comprises a tank (113) with a tank wall (114), wherein the cell stack (120) is positioned within the tank (113) and the tank wall (114) forms the at least one inner boundary surface (112) for the cell stack (120), and wherein the tank (113) is filled with an electrically non-conducting barrier liquid (130) conveying dimensional stability of the cell rack (110) to the cell stack (120) immersed in the barrier liquid (130).

9. Electrolyzer according to claim 8, **characterized in that** the tank (113) is a pressure vessel with a round cross-section.

10. Electrolyzer according to one of the claims 8 or 9, **characterized in that** the electrolyzer (100) further comprises a conductivity sensor (140) for monitoring the electrical conductivity of the barrier liquid (130).

11. Electrolyzer according to one of the claims 8 to 10, **characterized in that** the barrier liquid (130) contains an indicator liquid for indicating leakages of electrolyte from the cell stack (120) by color change.

12. Electrolyzer according to one of the claims 8 to 11, **characterized in that** the tank (113) is connected to a circulation loop (150) of the barrier liquid (130), wherein the circulation loop (150) comprises a heat exchanger (151) for heating and/or cooling the barrier liquid (130).

13. Electrolyzer according to one of the claims 8 to 12, **characterized in that** a pressure sensor (160) is provided to monitor the pressure in the tank (113), wherein the pressure sensor (160) is connected to a control unit (161) configured to control the pressure of the barrier liquid (130) by adjusting a pressure applied from an external pressure source (162) to the tank.

14. Electrolyzer according to one of the claims 8 to 11, **characterized in that** tank (113) is completely filled with the barrier liquid (130) and sealed for an autogenous pressure control of the barrier liquid (130).

## Patentansprüche

1. Elektrolyseur mit einem Zellengestell(110) und einem Zellenstapel (120), wobei der Zellenstapel (120) eine Vielzahl von in einer axialen Richtung (A) gestapelten Elektrolysezellen (1) aufweist, wobei das Zellengestell(110) eine Kompressionsvorrichtung (111) zum Zusammenpressen der Elektrolysezellen (1) des Zellenstapels (120) in der axialen Richtung (A) aufweist, um die elektrische Verbindung der Zellen (1) in Reihenschaltung aufrechtzuerhalten, und wobei der Zellenstapel (120) in dem Zellengestell (110) mit horizontal verlaufender Axialrichtung (A) montiert ist, wobei die Elektrolysezellen (1) jeweils ein Zellengehäuse (2) und einen flächigen Separator (3) aufweisen, wobei eine Anodenkammer (4) und eine Kathodenkammer (5), die durch den flächigen Separator (3) getrennt sind, durch das Zellengehäuse (2) definiert sind und wobei die Anodenkammer (4) und die Kathodenkammer (5) jeweils entsprechend eine Anode (6) und eine Kathode (7) umfassen, **dadurch gekennzeichnet, dass** das Zellengehäuse (2) mindestens zwei Metallfolienbögen (8, 9) umfasst, die jeweils einen umlaufenden Randbereich (10, 11) aufweisen, wobei die Metallfolienbögen (8, 9) in den Randbereichen (10, 11) durch eine elektrisch isolierende Klebeverbindung (12) zwischen den Metallfolienbögen (8, 9) aneinander befestigt sind, und wobei der flächige Separator (3) in der Zelle befestigt ist, indem er in die Klebeverbindung (12) zwischen den Randbereichen (10, 11) eingeschlossen ist.

2. Elektrolyseur nach Anspruch 1, **dadurch gekennzeichnet, dass** die Klebeverbindung (12) durch einen chemisch gehärteten Klebstoff oder einen getrockneten Klebstoff auf Lösungsmittelbasis bereitgestellt ist.

3. Elektrolyseur nach Anspruch 1, **dadurch gekennzeichnet, dass** die Klebeverbindung (12) durch einen thermoplastischen Kunststoff bereitgestellt ist.

4. Elektrolyseur nach einem der Ansprüche 1 bis 3, **dadurch gekennzeichnet, dass** die Metallfolienbögen (8, 9) eine Dicke von 0,2 mm oder weniger aufweisen.

5. Elektrolyseur nach einem der Ansprüche 1 bis 4, **dadurch gekennzeichnet, dass** die Elektrolysezelle (1) eine rechteckige, quadratische, sechseckige oder runde Form aufweist.

6. Elektrolyseur nach einem der Ansprüche 1 bis 5, **dadurch gekennzeichnet, dass** das Zellengehäuse (2) an der Außenseite in den Randbereichen (10, 11) mit einer elektrisch isolierenden Schicht (13) beschichtet ist.

7. Elektrolyseur nach einem der Ansprüche 1 bis 6, **dadurch gekennzeichnet, dass** das Zellengestell (110) mindestens eine innere Begrenzungsfläche (112) für den Zellenstapel (120) aufweist, die dem Zellenstapel (120) Formstabilität verleiht, indem sie die Elektrolysezellen (1) zumindest seitlich und von unten abstützt.

8. Elektrolyseur nach Anspruch 7, **dadurch gekennzeichnet, dass** das Zellengestell (110) einen Tank (113) mit einer Tankwand (114) umfasst, wobei der Zellenstapel (120) innerhalb des Tanks (113) positioniert ist und die Tankwand (114) die mindestens eine innere Begrenzungsfläche (112) für den Zellenstapel (120) bildet, und wobei der Tank (113) mit einer elektrisch nicht leitenden Sperrflüssigkeit (130) gefüllt ist, die dem in die Sperrflüssigkeit (130) eingetauchten Zellenstapel (120) Formstabilität des Zellengestells (110) vermittelt.

9. Elektrolyseur nach Anspruch 8, **dadurch gekennzeichnet, dass** der Tank (113) ein Druckbehälter mit einem runden Querschnitt ist.

10. Elektrolyseur nach einem der Ansprüche 8 oder 9, **dadurch gekennzeichnet, dass** der Elektrolyseur (100) ferner einen Leitfähigkeitssensor (140) zur Überwachung der elektrischen Leitfähigkeit der Sperrflüssigkeit (130) umfasst.

11. Elektrolyseur nach einem der Ansprüche 8 bis 10, **dadurch gekennzeichnet, dass** die Sperrflüssigkeit (130) eine Indikatorflüssigkeit zur Anzeige von Elektrolytleckagen aus dem Zellstapel (120) durch Farbänderung enthält.

12. Elektrolyseur nach einem der Ansprüche 8 bis 11, **dadurch gekennzeichnet, dass** der Tank (113) mit einem Kreislauf (150) der Sperrflüssigkeit (130) verbunden ist, wobei der Kreislauf (150) einen Wärmetauscher (151) zum Erwärmen und/oder Kühlen der Sperrflüssigkeit (130) umfasst.

13. Elektrolyseur nach einem der Ansprüche 8 bis 12, **dadurch gekennzeichnet, dass** ein Drucksensor (160) vorgesehen ist, um den Druck in dem Tank (113) zu überwachen, wobei der Drucksensor (160) mit einer Steuereinheit (161) verbunden ist, die so konfiguriert ist, dass sie den Druck der Sperrflüssigkeit (130) durch Einstellen eines von einer externen Druckquelle (162) auf den Tank ausgeübten Drucks steuert.

14. Elektrolyseur nach einem der Ansprüche 8 bis 11, **dadurch gekennzeichnet, dass** der Tank (113) vollständig mit der Sperrflüssigkeit (130) gefüllt und für eine autogene Druckregelung der Sperrflüssigkeit (130) verschlossen ist.

## Revendications

1. Electrolyseur comprenant un support de cellules (110) et une pile de cellules (120), dans lequel la pile de cellules (120) comprend une pluralité de cellules d'électrolyse (1) empilées dans une direction axiale (A), dans lequel le support de cellules (110) comprend un dispositif de compression (111) pour comprimer les cellules d'électrolyse (1) de la pile de cellules (120) dans la direction axiale (A) afin de maintenir la connexion électrique des cellules (1) en série, et dans lequel la pile de cellules (120) est montée dans le support de cellules (110) avec la direction axiale (A) s'étendant horizontalement, dans lequel les cellules d'électrolyse (1) comprennent chacune un boîtier de cellule (2) et un séparateur en forme de feuille (3), dans laquelle une chambre anodique (4) et une chambre cathodique (5) séparées par le séparateur en forme de feuille (3) sont définies par le boîtier de cellule (2) et dans laquelle la chambre anodique (4) et la chambre cathodique (5) comprennent une anode (6) et une cathode (7), respectivement, **caractérisées par le fait que** le boîtier de cellule (2) comprend au moins deux feuilles de métal (8, 9) ayant chacune un bord circonférentiel (10, 11), dans lequel les feuilles de métal (8, 9) sont fixées l'une à l'autre dans les bords (10, 11) par une liaison adhésive (12) isolant électriquement les feuilles de métal (8, 9), et dans lequel le séparateur en forme de feuille (3) est monté dans la cellule en étant inclus dans la liaison adhésive (12) entre les bords (10, 11).

2. Electrolyseur selon la revendication 1, **caractérisé par le fait que** la liaison adhésive (12) est assurée par un adhésif durci chimiquement ou un adhésif sec à base de solvant.

3. Electrolyseur selon la revendication 1, **caractérisé par le fait que** la liaison adhésive (12) est assurée par un matériau thermoplastique.

4. Electrolyseur selon l'une des revendications 1 à 3, **caractérisé par le fait que** les feuilles de métal (8, 9) ont une épaisseur inférieure ou égale à 0,2 mm.

5. Electrolyseur selon l'une des revendications 1 à 4, **caractérisé par le fait que** la cellule d'électrolyse (1) est de forme rectangulaire, quadratique, hexagonale ou ronde.

6. Electrolyseur selon l'une des revendications 1 à 5, **caractérisé par le fait que** l'enveloppe de la cellule (2) est recouverte sur le côté extérieur dans les zones de bord (10, 11) d'une couche d'isolation électrique (13).

7. Electrolyseur selon l'une quelconque des revendications 1 à 6, **caractérisé en ce que** le support de cellules (110) fournit au moins une surface limite intérieure (112) pour la pile de cellules (120), laquelle surface limite (112) fournit une stabilité dimensionnelle à la pile de cellules (120) en soutenant les cellules d'électrolyse (1) au moins latéralement et par le bas.

8. Electrolyseur selon la revendication 7, **caractérisé en ce que** le support de cellules (110) comprend un réservoir (113) avec une paroi de réservoir (114), dans lequel la pile de cellules (120) est positionnée dans le réservoir (113) et la paroi de réservoir (114) forme au moins une surface limite intérieure (112) pour la pile de cellules (120), et dans lequel le réservoir (113) est rempli d'un liquide barrière électriquement non conducteur (130) transmettant la stabilité dimensionnelle du support de cellules (110) à la pile de cellules (120) immergée dans le liquide barrière (130).

9. Electrolyseur selon la revendication 8, **caractérisé par le fait que** le réservoir (113) est un récipient sous pression avec une section transversale ronde.

10. Electrolyseur selon l'une des revendications 8 ou 9, **caractérisé par le fait que** l'électrolyseur (100) comprend en outre un capteur de conductivité (140) pour surveiller la conductivité électrique du liquide de barrage (130).

11. Electrolyseur selon l'une des revendications 8 à 10, **caractérisé par le fait que** le liquide de barrage (130) contient un liquide indicateur pour indiquer les fuites d'électrolyte de la pile de cellules (120) par un changement de couleur.

12. Electrolyseur selon l'une des revendications 8 à 11, **caractérisé par le fait que** le réservoir (113) est relié à une boucle de circulation (150) du liquide de barrage (130), la boucle de circulation (150) comprenant un échangeur de chaleur (151) pour chauffer et/ou refroidir le liquide de barrage (130).

13. Electrolyseur selon l'une des revendications 8 à 12, **caractérisé en ce qu'**un capteur de pression (160) est prévu pour surveiller la pression dans le réservoir (113), le capteur de pression (160) étant connecté à une unité de commande (161) configurée pour contrôler la pression du liquide de barrage (130) en ajustant une pression appliquée à partir d'une source de pression externe (162) au réservoir.

14. Electrolyseur selon l'une des revendications 8 à 11, **caractérisé par le fait que** le réservoir (113) est complètement rempli de liquide de barrage (130) et scellé pour un contrôle autogène de la pression du liquide de barrage (130).
